(19) Europäisches Patentamt

European Patent Office

Office européen des brevets

(11) Publication number: **0 105 249**
**B1**

(12) **EUROPEAN PATENT SPECIFICATION**

(45) Date of publication of patent specification: **30.07.86**

(21) Application number: **82901093.3**

(22) Date of filing: **13.04.82**

(86) International application number:
**PCT/AU82/00056**

(87) International publication number:
**WO 83/03593 27.10.83 Gazette 83/25**

(51) Int. Cl.⁴: **B 65 G 53/22,** B 65 G 53/28,
B 65 G 53/36

(54) **APPARATUS FOR HANDLING PARTICULATE MATERIAL.**

(43) Date of publication of application:
**18.04.84 Bulletin 84/16**

(45) Publication of the grant of the patent:
**30.07.86 Bulletin 86/31**

(84) Designated Contracting States:
**DE FR GB NL SE**

(56) References cited:
**AU-B-1 077 376**
**AU-B-1 402 062**
**AU-B-2 415 356**
**GB-B- 675 113**
**GB-B- 834 052**
**GB-B- 995 051**

(73) Proprietor: **KOCKUMS INDUSTRIES (AUST.)
PTY. LTD.
2070 Hume Highway
Cambellfield VIC 3061 (AU)**

(72) Inventor: **PRICE, Ivan Reginald
9 Scarlet Ash Court
Eltham, VIC 3095 (AU)**

(74) Representative: **Topps, Ronald et al
D. YOUNG & CO 10 Staple Inn
London WC1V 7RD (GB)**

Courier Press, Leamington Spa, England.

# Description

This invention relates to apparatus for handling particulate material in bulk. The material is in powder or granular form and the invention may be applicable to any such materials such as cement, lime, flyash, flour, animal feed, sugar, plaster, plastics and chemicals.

In bulk handling of particulate material it is known to provide a pressure vessel for storing and discharging the material. The vessel may be either generally cylindrical with hemispherical or torispherical or conical ends or may be generally spherical. The vessel may be filled through a hatch in the top of the vessel or through a pipeline in the top of the vessel. During discharge of the contents of the vessel, air is pumped into the lower portion of the vessel to fluidize the contents and the material is discharged through a lower outlet opening. The vessel is constructed so as to be capable of withstanding relatively high pressure differences between the interior and exterior of the vessel. A major problem of such vessels in some applications is that they are wasteful of available storage space because of their cylindrical or spherical shape. For example, vessels for storing bulk cement and/or barytes or bentonite used on offshore oil rigs require considerable storage space in the ships that carry the material to the oil rigs. In fact the space that is required for a predetermined amount of material using the spherical or generally cylindrical tanks has a considerable bearing on the size of the ship required.

AU—B—10773/76 discloses an apparatus for handling particulate material, the apparatus including a pressure vessel for receiving particulate material therein and which is capable of withstanding relatively high pressure differentials between the interior and exterior of the vessel, the pressure vessel including fluidizing means which admits pressurized gas to the pressure vessel to fluidize the particulate material therein during discharge of the vessel contents, a separate storage vessel being provided for receiving particulate material, a transfer line connecting the storage vessel to the pressure vessel to enable the transfer of particulate material from the storage vessel to the pressure vessel, the storage vessel including fluidizing means to fluidize the particulate material therein during transfer of material from the storage vessel to the pressure vessel.

According to the present invention there is provided apparatus for handling particulate material including: a pressure vessel for receiving particulate material therein and being capable of withstanding relatively high pressure differentials between the interior and exterior of the vessel, the pressure vessel including fluidizing means enabling admission of a pressurized gas to the pressure vessel so as to fluidize the particulate material therein during discharge of the vessel contents, a storage vessel for receiving particulate material therein, a transfer line for connecting the storage vessel to the pressure vessel to enable transfer of particulate material from the storage vessel to the pressure vessel, the storage vessel including fluidizing means enabling admission of a gas to the storage vessel so as to fluidize the particulate material theein during transfer of particulate material from the storage vessel to the pressure vessel, characterized in that the pressure vessel is at least partially located within the storage vessel.

The storage vessel need not be capable of withstanding high pressure differences, and may be. generally square or rectangular in cross--section so as to enable close packing of a plurality of such storage vessels. The pressure vessel is at least partially located within the storage vessel so that the pressure vessel does not necessarily lead to wastage of available space.

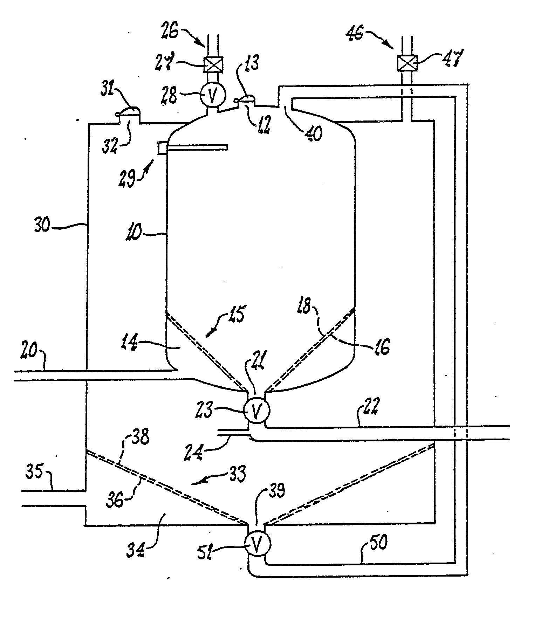

An embodiment of the present invention will now be described, by way of example, with reference to the accompanying drawing in which the single Figure shows a schematic sectional view of a material handling apparatus.

The illustrated apparatus for handling particulate material includes a pressure vessel 10 for receiving particulate material therein and which is capable of withstanding relatively high pressure differentials between the interior and exterior of the vessel 10. The pressure vessel 10 illustrated is of generally conventional form, being generally cylindrical having its axis vertical and having torspherical upper and lower ends. A main inlet 12 for initial filling of the pressure vessel 10 is provided in the top of the vessel 10 as is known. The inlet 12 is provided with an inlet hatch 13 which is opened for initial filling of the vessel 10 and which is closed after the initial filling to form a pressure tight seal. The pressure vessel 10 is also provided with a gas exhaust 26 provided with a filter 27 as is known in the art. The gas exhaust 26 and filter 27 are shown as being provided adjacent to the main inlet 12 in the upper portion of the vessel 10. However, if desired, the gas exhaust 26 may be associated with a nozzle of an inlet line used in filling of the vessel 10. As is known, the filling of the pressure vessel 10 is achieved by introducing the material in a gas-fluidized state through the main inlet 12, the fluidizing gas being exhausted to atmosphere through the filter 27 which prevents the material leaving the vessel 10. The gas exhaust 26 is provided with an exhaust valve 28 in the case where the exhaust is provided separately from the inlet nozzle. The exhaust 28 is open during filling of the vessel 10 so that the fluidizing gas is exhausted. The exhaust valve 28 is closed when the vessel 10 is filled.

The pressure vessel 10 is also provided with level detecting means 29 provided in the upper portion of the vessel 10 and operative to detect when the vessel 10 is substantially filled with material. The level detecting means 29 is shown in the form of a probe extending inwardly from the wall of the vessel 10. The probe may be operative to generate a signal when the vessel 10 is filled so that the filling operation can be terminated.

The pressure vessel 10 includes fluidizing means 15 enabling admission of a pressurized gas to the pressure vessel 10 so as to fluidize the particulate material therein during discharge of the vessel contents. The gas is preferably compressed air and is supplied from any suitable external air compressor. The fluidizing means 15 is shown of generally conventional form. That is, the fluidizing means 15 comprises a shallow funnel in the lower portion of the pressure vessel 10, the funnel defining a plenum chamber 14 between the under surface of the funnel and the lowermost portion of the pressure vessel 10. A fluidizing air inlet 20 is provided for the introduction of pressurised air into the plenum chamber 14. The funnel is defined by a perforated plate 16 to enable the compressed air to be transferred from the plenum chamber 14 to the body of the pressure vessel 10 containing the material. The perforated plate 16 is covered by a gas permeable membrane 18 such as a suitable cloth which enables compressed air to enter the vessel 10 from the plenum chamber 14 but prevents material from entering the plenum chamber 14 from the body of the vessel 10. At the mouth of the funnel there is provided an outlet 21 for the material, the outlet 21 being connected, or arranged to be connected to a material outlet line 22. An outlet valve 23 is provided immediately adjacent the outlet 21. During discharge of vessel 10 the material passes through the outlet 21 and outlet valve 23 to the outlet line 22. An auxiliary air inlet 24 is shown provided in the outlet line 22 immediately downstream of the outlet valve 23 to assist in maintaining the material in a fluidized state in the outlet line 22 during discharge of the material from one pressure vessel 10.

The pressure vessel 10 is arranged to be discharged in a generally conventional manner. Thus, the discharge operation usually comprises pressurizing the vessel 10 to say 200 to 250 kPa through the inlet 20 to the plenum chamber 14. During this pressurizing step the exhaust vlave 28, the main inlet 12, and the outlet valve 23 are all closed. When the desired pressure is reached in the pressure vessel 10 the outlet valve 23 is opened while compressed air continues to be supplied to the pressure vessel 10 through the plenum chamber 14 and air permeable membrane 18. The compressed air fluidizes the material and the mixture of air and material flows rapidly through the outlet line 22. If desired compressed air may be simultaneously supplied to the outlet line 22 through the auxiliary air inlet 24 to assist in maintaining the material in a fluidized state. The arrangement comprising the discharge funnel in the bottom of the pressure vessel 10 covered with the air permeable membrane 18 ensures that most of the material will be discharged, leaving minimal residue in the vessel 10.

A storage vessel 30 is provided for receiving particulate material therein. A transfer line 50 connects the storage vessel 30 to the pressure vessel 10 to enable transfer of particulate material from the storage vessel 30 to the pressure vessel 10. The storage vessel 10 includes fluidizing means 33 enabling admission of a gas to the storage vessel 30 so as to fluidize the particulate material therein during transfer of particulate material from the storage vessel 30 to the pressure vessel 10. The storage vessel 30 need not be capable of withstanding high pressure differences between the interior and exterior thereof. The pressure vessel 10 is constructed to be surrounded by the storage vessel 30, i.e. the pressure vessel 10 is at least partially located within the storage vessel 30. The storage vessel 30 may be arranged to contain three to ten times the volume of particulate material that the pressure vessel 10 can store. Because the storage vessel 30 does not need to be capable of withstanding high pressure differences as will be explained later, the storage vessel 30 may be made generally square or rectangular in cross-section thus enabling close packing of a plurality of storage vessels 30, i.e. maximization of use of the available storage space in a particular situation. For example, the storage vessel 30 may be generally hexahedral in shape having the pressure vessel 10 mounted in the upper portion thereof so that the upper portion of the pressure vessel 10 and particularly the main inlet 12 is accessible from the top of the storage vessel 30.

The storage vessel 30 is provided with an inlet 32 in the upper end thereof. The inlet 32 is of generally the same form as the main inlet 12 to the pressure vessel 10, i.e. having an inlet hatch 31 which can be opened for filling of the storage vessel 30. The storage vessel 30 includes a storage exhaust 46 open to atmosphere and including a filter 47. Fluidizing gas used in conveying the particulate material into the storage vessel 30 is exhausted through the filter 47 of the storage exhaust 46 when the storage vessel 30 is being filled. In an alternative arrangement to that illustrated there may be a single filter for both vessels 10, 30, i.e. a combined filter. The filter 47 is located in or near the top of the storage vessel 30. The storage exhaust 46 being open to atmosphere also serves to prevent excessive vacuum or excessive pressure building up in the storage vessel 30 as will be explained later.

The storage vessel 30 includes pressure sensing means (not shown) for sensing the pressure difference between the interior and exterior of the storage vessel 30 and for initiating a predetermined response if the magnitude of the pressure difference reaches a predetermined level. For example, the sensing means may be operative to generate an alarm should the pressure inside the storage vessel 30 rise above or fall below the ambient pressure by a predetermined amount, For example, such build up of a pressure difference may occur if the filter element 47 is clogged with material.

The storage vessel 30 is provided with fluidizing means 33 enabling gas to enter the storage vessel 30 to fluidize the contents. The fluidizing means 33 is of generally the same construction as the fluidizing means 15 provided in the pressure vessel 10. That is, there is provided a conical or inverted pyramidal perforated plate 36 in the lower portion of the storage vessel 30, the plate 36 defining a plenum chamber 34 between the lower surface of the plate 36 and the lower portion of the vessel 30. A fluidizing gas inlet 35 is provided for introducing fluidizing gas into the plenum chamber 34. The perforated plate 36 is covered with an air permeable membrane 38 such as a suitable cloth. A material outlet 39 is provided at the mouth of the conical perforated plate 36 and adjacent the lowermost portion of the plenum chamber 34.

The transfer line 50 is in the form of a pipe from the material outlet 39 of the storage vessel 30 to a transfer inlet 40 provided in the pressure vessel 10. The transfer inlet 40 is provided in the top of the pressure vessel 10. The transfer inlet 40 is shown as being separate from the main inlet 12 although, alternatively, the transfer inlet 40 may be provided by the main inlet 12.

The pressure vessel 10 can be sealed from the storage vessel 30 so that during pressurization of the pressure vessel 10 before and during discharge of material from the pressure vessel 10, the pressure in the pressure vessel 10 is not communicated back to the storage vessel 30 through the transfer line 50. This may be achieved by sealing the transfer inlet 40 before commencing the discharge operation. However in the illustrated apparatus, the transfer line 50 includes a transfer valve 51 which is selectively operable to open and close the transfer line 50 to a material flow, the transfer valve 51 being closed during pressurization of and discharge of the contents of the pressure vessel 30. The transfer valve 51 is located in the transfer line 50 adjacent to the material outlet 39 of the storage vessel 30. Alternatively, the transfer valve 51 may be located in the transfer line 50 adjacent to the transfer inlet 40 of the pressure vessel 10. In the latter case the transfer conduit 50 need not be constructed to withstand the same internal high pressures as the pressure vessel 10.

The method of handling particulate material according to the present invention will now be described together with the manner of operation of the apparatus described above.

The method comprises filling the pressure vessel 10 with particulate material by entraining the material in a gas and exhausting the gas from the pressure vessel 10 as it is being filled. Of course, the term "filling" does not necessarily mean completely filling the pressure vessel.

The method further comprises filling the storage vessel 30 with particulate material by entraining the material in a gas and exhausting gas from the storage vessel 30 as it is being filled. The manner of filling the storage and pressure vessels 30, 10 may be substantially conventional as has been described above. The air in which the material is entrained is exhausted to atmosphere through the filter 47 in the storage exhaust 46. Similarly during filling of the pressure vessel 10 the entraining air is exhausted through the filter 27 and valve 28 in the gas exhaust 26. The pressure vessel 10 is filled first so that if there is insufficient material to fill the storage vessel 30 the discharge operation to be described later will be initiated by discharging of the filled pressure vessel 10. After the filling operation, the respective inlets 12, 32 to the pressure and storage vessels 10, 30 are closed together with the valve 28 in the gas exhaust 26 of the pressure vessel 10.

The method also includes the step of supplying pressurizing gas to the interior of the pressure vessel 10 at a relatively high pressure and discharging the material from the pressure vessel 10 by opening the outlet line 22 from the pressure vessel 10 while continuing to supply pressurizing gas to the pressure vessel 10 so as to fluidize the material being discharged. During the pressurizing part of this step the main inet 12, the transfer valve 51, the outlet valve 23 and the exhaust valve 28 are all closed. The interior of the pressure vessel 10 may be pressurized to a pressure of say 200 to 250 kPa. The pressurizing is achieved by introducing compressed air through the air inlet 20 to the fluidizing means 15 in the bottom of the pressure vessel 10.

The discharging of the material from the pressure vessel 10 while supplying fluidizing gas to the pressure vessel 10 is carried out with the outlet valve 23 open and fluidzing gas is being continuously supplied to the plenum chamber 14 in the pressure vessel 10. Also auxiliary gas may be being supplied to the outlet line 22 immediately downstream of the outlet valve 23. In practice, the pressure in the pressure vessel 10 drops suddenly when the contents of the vessel 10 are substantially completely discharged. This pressure drop may be detected to initiate the next steps. After complete discharge of the material from the pressure vessel 10 the outlet line 22 is closed and the supplies of fluidizing air to the plenum chamber 14 and auxiliary air to the outlet 22 are stopped.

After the pressure in the pressure vessel 10 has fallen or been reduced, the transfer line 50 between the pressure vessel 10 and the storage vessel 30 containing further particulate material is opened. The pressure in the pressure vessel 10 naturally drops as explained above when the pressure vessel 10 is substantially completely discharged. However, if the outlet valve 23 is closed before the supply of fluidizing air is stopped there can be a relatively high pressure existing in the pressure vessel 10. In this case it is desirable to open the exhaust valve 28 so that the pressure in the pressure vessel 10 is returned to atmospheric pressure. The opening of the transfer line 50 can be achieved in the preferred embodiment by opening the transfer valve 51.

A pressure differential between the pressure vessel 10 and the storage vessel 30 is created before, after or when the transfer line 50 is opened. Preferably this pressure differential is relatively low. This differential is preferably created by creating a partial vacuum in the pressure vessel 10. This may be achieved through the gas exhaust valve 28 and gas exhaust line 26. That is, a vacuum pump (not shown) may be connected to the gas exhaust line 26 in the pressure vessel 10 to create the partial vacuum in the pressure vessel 10. The partial vacuum in the pressure vessel 10 creates a pressure differential between the storage vessel 30 and pressure vessel 10 since the two vessels are in communication by means of the transfer line 50. However, the suction created in the storage vessel 30 is insufficient to cause the structural failure of the storage vessel 30 because the vacuum is preferably insufficient to cause such failure and also because the storage vessel 30 is in communication with atmosphere through the storage exhaust 46 including the filter 47. However, if the filter 47 is clogged so that there is no relief of pressure in the storage vessel 30 an alarm may be generated should the magnitude of the pressure differential between the storage vessel 30 and the atmosphere rise to a predetermined amount. Alternatively, or in addition, detection of a predetermined rise in pressure differential may automatically disconnect the vacuum pump from the pressure vessel 10.

After or during creation of the pressure differential between the storage vessel 30 and pressure vessel 10, the material in the storage vessel 30 is fluidized so that it flows through the transfer line 50 to refill the pressure vessel 10. For this purpose low pressure compressed air is preferably supplied to the air inlet 35 to the plenum chamber 34 in the bottom of the storage vessel 30. Such fluidizing air may be supplied at say 15—20 kPa. The air fluidizes the material in the storage vessel 30 so that it is transferred . through the transfer line 50 to the pressure vessel 10. The supply of fluidizing air to the plenum chamber 34 of the storage vessel 30 may be commenced simultaneously with the creation of the partial vacuum in the pressure vessel 10 or immediately after such vacuum creation. The fluidizing air entering the pressure vessel 10 with the material from the storage vessel 30 is exhausted to the vacuum pump. When the pressure vessel 10 has been refilled, or after all the remaining material in the storage vessel 30 has been transferred to the pressure vessel 10, the transfer line·50 is closed. The transfer line 50 for example may be closed when the level detecting means 29 in the pressure vessel 10 indicates that the pressure vessel 10 is full of material. The transfer can be stopped by closing the transfer valve 51. Preferably, simultaneously with closing the transfer valve 51, the supply of fluidizing air to the storage vessel plenum chamber 34 is stopped. It will be seen that at this stage of the process, the original contents of the pressure vessel 10 have been discharged and the vessel 10 has been refilled from the storage vessel 30. The steps of discharging the pressure vessel 10 and refilling the pressure vessel 10 from the storage vessel 30 can then be repeated as many times as necessary until both vessels 10, 30 are emptied.

Thus it will be seen that the present invention provides a method and apparatus for handling particulate material which enables more efficient use of available storage space because the storage vessel 30 can be made to be square or rectangular in cross-section. The storage vessel 30 can be so made because it need not withstand high pressure differences during the step of transferring material from the storage vessel 30 to the pressure vessel 10. That is, any partial vacuum created in the pressure vessel 10 is relatively low and the fluidizing air supplied to the storage vessel 30 is also at a relatively low pressure. Also the storage vessel 30 is in communication with the atmosphere through the storage exhaust 46 so that this also assists in preventing the occurrence of excessive pressure differential between the interior of the storage vessel 30 and the atmosphere. The construction of square of rectangular storage vessels 30 increases the use of available storage space particularly where such storage space is valuable such as in ships transporting bulk particulate materials, say to offshore oil rigs.

It will be readily appreciated that the apparatus of the present invention can be provided with a control circuit for opening and closing the various valves and gas supplies in the desired sequence. The control circuit may be automatically operable in response to various stages of the operation being reached. For example, the level detecting means 29 in the pressure vessel 10 may be operative to generate an electrical signal when that vessel 10 is filled to thereby cause the control circuit to stop the process of transferring material from the storage vessel 30 to the pressure vessel 10 and initiate the next step in the method. Also the natural rapid drop in the pressure in the pressure vessel 10 when the contents are substantially completely discharged can be detected to stop the discharge step and initiate the refilling of the pressure vessel 10.

The method as herein described results in discontinuous discharge of material through the outlet line 22. That is, during transfer of material from the storage vessel 30 to the pressure vessel 10 the outlet line 22 is not conveying material. Accordingly, two substantially identical apparatuses according to the present invention may be provided and having their respective pressure vessel outlets 21 coupled to a single outlet line 22 so that substantially continuous discharge of material may be achieved by operating the two apparatuses out of phase. That is, one apparatus will be discharged from the pressure vessel 10 while the other is being refilled from the associate storage vessel 30 and vice versa.

**Claims**

1. Apparatus for handling particulate material including: a pressure vessel (10) for receiving particulate material therein and being capable of withstanding relatively high pressure differentials between the interior and exterior of the vessel (10), the pressure vessel (10) including fluidizing means (15) enabling admission of a pressurized gas to the pressure vessel (10) so as to fluidize the particulate material therein during discharge of the vessel contents, a storage vessel (30) for receiving particulate material therein, a transfer line (50) for connecting the storage vessel (30) to the pressure vessel (10) to enable transfer of particulate material from the storage vessel (30) to the pressure vessel (10), the storage vessel including fluidizing means (33) enabling admission of a gas to the storage vessel (30) so as to fluidize the particulate material therein during transfer of particulate material from the storage vessel (30) to the pressure vessel (10), characterized in that the pressure vessel (10) is at least partially located within the storage vessel (30).

2. Apparatus as claimed in Claim 1, further characterized in that the storage vessel (30) includes pressure sensing means for sensing the pressure difference between the interior and exterior of the storage vessel and for initiating a predetermined response if the magnitude of the pressure difference reaches a predetermined level.

3. Apparatus as claimed in Claim 1 or Claim 2, further characterized in that the storage vessel (30) is generally square or rectangular in cross-section so as to enable close packing of a plurality of said storage vessels (30).

**Patentansprüche**

1. Vorrichtung zur Behandlung von feinteiligem Material mit einem Druckkessel (10) zur Aufnahme von feinteiligem Material darin, der in der Lage ist, relativ hohen Druckunterschieden zwischen dem Inneren und dem Äußeren des Kessels (10) zu widerstehen, wobei der Druckkessel (10) Fluidisiereinrichtungen (15) enthält, die die Einführung eines unter Druck stehenden Gases in den Druckkessel (10) ermöglichen, um so das feinteilige Material darin während einer Entnahme des Kesselinhalts zu fluidisieren, einem Speicherkessel (30) zur Aufnahme von feinteiligem Material darin, einer Überführungsleitung (50) zur Verbindung des Speicherkessels (30) mit dem Druckkessel (10), um eine Überführung von feinteiligem Material von dem Speicherkessel (30) zu dem Druckkessel (10) zu ermöglichen wobei der Speicherkessel Fluidisiereinrichtungen (33) enthält, die die Einführung eines Gases in den Speicherkessel (30) ermöglichen, um so das feinteilige Material darin während der Überführung von feinteiligem Material von dem Speicherkessel (30) zu dem Druckkessel (10) zu fluidisieren, dadurch gekennzeichnet, daß der Druckkessel (10) wenigstens teilweise in dem Speicherkessel (30) angeordnet ist.

2. Vorrichtung nach Anspruch 1, weiterhin dadurch gekennzeichnet, daß der Speicherkessel (30) Druckabfühleinrichtungen zum Abfühlen des Druckunterschiedes zwischen dem Inneren und dem Äußeren des Speicherkessels und zur Einleitung eines bestimmten Ansprechens, wenn die Größe des Druckunterschiedes einen bestimmten Wert erreicht, enthält.

3. Vorrichtung nach Anspruch 1 oder Anspruch 2, weiterhin dadurch gekennzeichnet, daß der Speicherkessel (30) im wesentlichen quadratischen oder rechteckigen Querschnitt besitzt, um so eine dichte Packung mehrerer dieser Speicherkessel (30) zu ermöglichen.

**Revendications**

1. Appareil de manutention de matière particulaire comportant: un récipient à pression (10) destiné à recevoir dans son intérieur de la matière particulaire et capable de résister à des différences de pression relativement grandes entre son intérieur et son extérieur, le récipient à pression (10) comportant des moyens de fluidisation (15) permettant d'admettre un gaz sous pression dans le récipient à pression (10) de façon à fluidiser la matière particulaire qu'il contient pendant le déchargement du contenu du récipient, un récipient de stockage (30) destiné à recevoir dans son intérieur de la matière particulaire, une conduite de transfert (50) assurant un raccordement entre le récipient de stockage (30) et le récipient à pression (10) pour permettre le transfert de matière particulaire du récipient de stockage (30) au récipient sous pression (10), le récipient de stockage comportant des moyens de fluidisation (33) permettant d'admettre un gaz dans le récipient de stockage (30) de façon à fluidiser la matière particulaire qu'il contient pendant transfert de celle-ci du récipient de stockage (30) au récipient sous pression (10), caractérisé en ce que le récipient à pression (10) est situé au moins partiellement à l'intérieur du récipient de stockage (30).

2. Appareil selon la revendication 1, caractérisé en outre en ce que le récipient de stockage (30) comporte un moyen détecteur de pression destiné à détecter la différence de pression entre l'intérieur et l'extérieur du récipient de stockage et à amorcer une réponse prédéterminée si la grandeur de l'écart de pression atteint un niveau prédéterminé.

3. Appareil selon la revendication 1 ou 2, caractérisé en outre en ce que le récipient de stockage (30) est à section de forme générale carrée ou rectangulaire de façon à permettre de disposer en formation serrée une pluralité desdits récipients de stockage (30).